# EUROPEAN PATENT SPECIFICATION

(11) **EP 0 306 011 B1**
(45) Date of publication and mention of the grant of the patent: **19.05.1993**
(21) Application number: 88114232.7
(22) Date of filing: 31.08.1988
(51) Int. Cl.: G09G 3/36, H04N 3/12

(54) **Method for driving a display device**
Verfahren zum Steuern eines Anzeigegerätes
Méthode de commande d'un dispositif d'affichage

(30) Priority: 31.08.1987 JP 218477/87
(43) Date of publication of application: 08.03.1989
(73) Proprietor: SHARP KABUSHIKI KAISHA, Osaka 545 (JP)
(72) Inventor: Numao, Takaji, Tenri-shi Nara-ken (JP)
(74) Representative: TER MEER STEINMEISTER & PARTNER GbR

(56) References cited:
- US-A- 4 655 561

## Description

The present invention relates to a driving method used in a liquid crystal display device utilizing, for example, a ferroelectric liquid crystal, for accomplishing, according to time sharing method, a display of plural gradations.

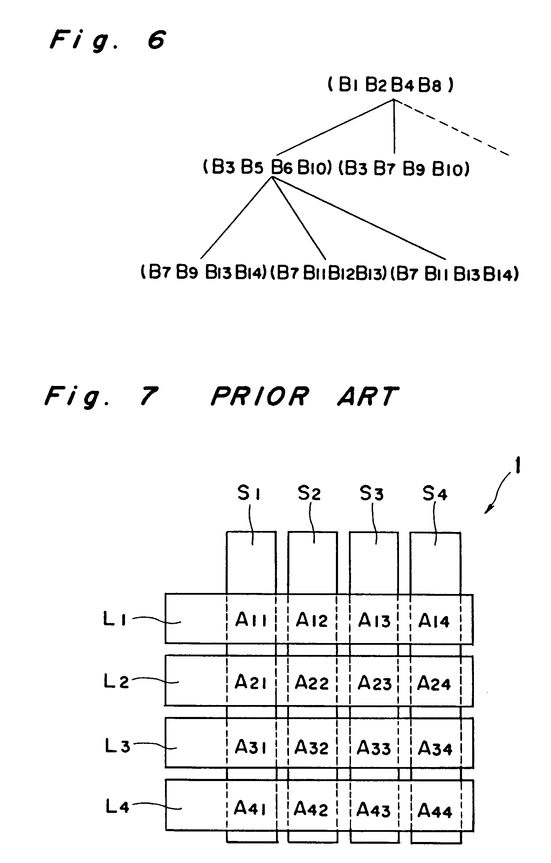

An example of prior art liquid crystal display device is schematically shown in Fig. 7. The liquid crystal device 1 shown therein includes a plurality of, for example, four scanning electrodes Lₚ (p = 1, 2, 3 and 4) and a plurality of signal electrodes Sⱼ (j = 1, 2, 3 and 4) arranged in a matrix fashion, and a picture element Aₚⱼ made of ferroelectric liquid crystal and disposed at each of the points of intersection between the scanning electrodes Lₚ and the signal electrodes Sⱼ.

This prior art liquid crystal display device has such a property that, when a voltage in excess of a first driving voltage Vth is applied to a selected one of the picture elements Aₚⱼ, a bright memory condition is established, and when a voltage lower than a second driving voltage -Vth is applied, a dark memory condition is established.

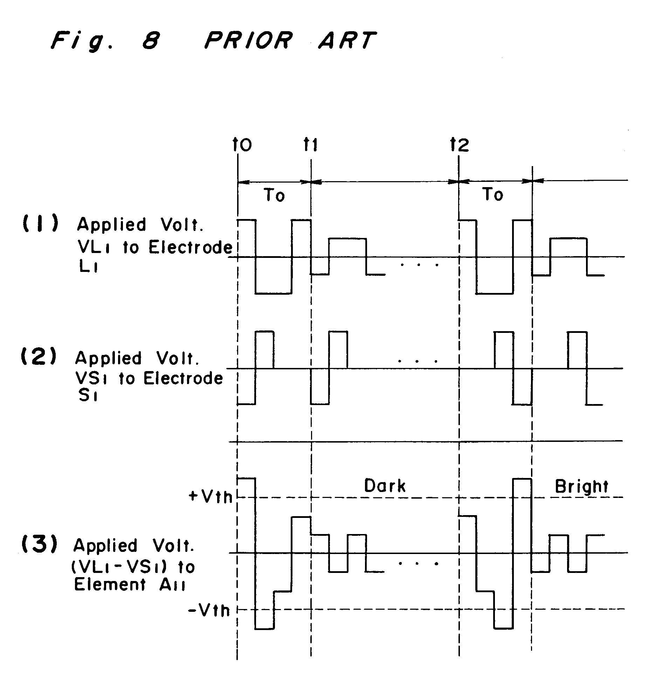

Fig. 8 illustrates waveforms used to explain the operation of the liquid crystal display device 1. Waveform (1) and (2) shown in Fig. 8 represent those of voltages VL₁ and VS₁ applied respectively to the scanning electrode L₁ and the signal electrode S₁, and a waveform (3) shown in Fig. 8 represents that of a voltage VL₁ - VS₁ applied to the picture element A₁₁. Such waveforms are e.g. shown in JP-A-62-250495 (published 31/10/87).

A selection time T₀ between a timing t0 and a timing t1 is a period during which the scanning electrode L₁ is selected. When a non-selection condition, in which the scanning electrode L₁ is not selected, is established after the selection time T₀, the voltage VL₁ - VS₁ applied to the picture element A₁₁ is lowered below the second driving voltage -Vth (subsequent to the timing t1), therefore the picture element A₁₁ assumes the dark memory condition until the timing (t2) at which the next succeeding selection time T₀ starts. Similarly, the waveforms of the respective voltages exhibited subsequent to the timing t2 are those permitting the picture element A₁₁ to assume the bright memory condition.

A method of effecting a display of 2³ gradations in this liquid crystal display device according to a conventional time sharing method will now be described.

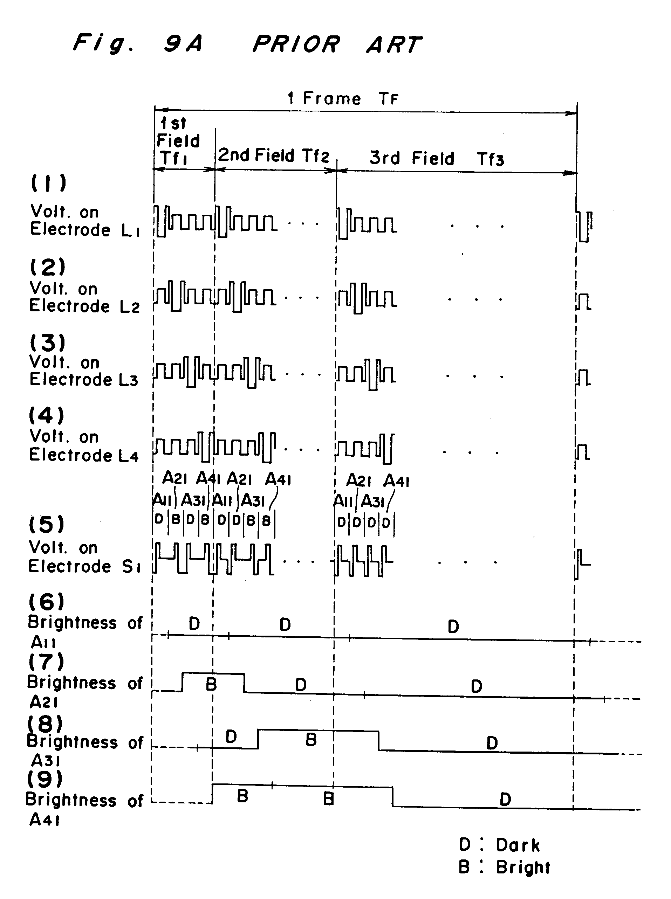

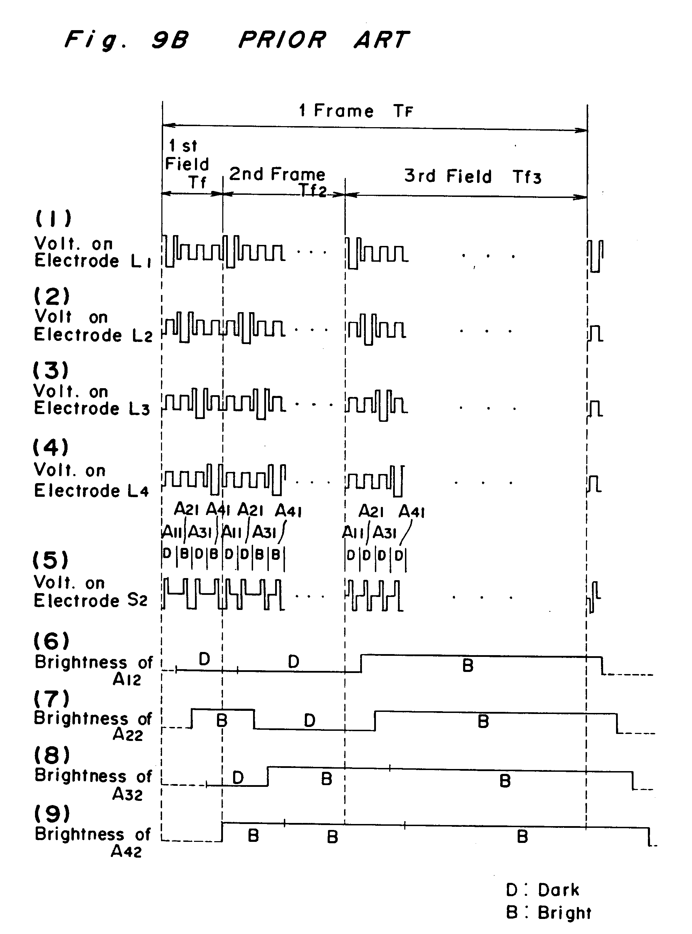

Figs. 9A and 9B illustrate respective waveforms used to explain the conventional driving method for accomplishing the display of 2³ gradations with the use of the liquid crystal display device 1. Waveforms (1) to (4) shown in each of Fig. 9A and Fig. 9B represent those of voltages applied respectively to the scanning electrodes L₁ to L₄, and waveforms (5) shown in Figs. 9A and 9B represent those of voltages applied to the signal electrodes S₁ and S₂ respectively. Waveforms (6) to (9) shown in Fig. 9A represent the brightness of the respective picture elements A₁₁, A₂₁, A₃₁ and A₄₁, whereas waveforms (6) to (9) shown in Fig. 9B represent the brightness of the respective picture elements A₁₂, A₂₂, A₃₂ and A₄₂.

When the liquid crystal display device 1 is utilized to effect the display of 2ⁿ gradations according to the time sharing method, as shown in Figs. 9A and 9B, one frame has to be divided into three fields and arrangement must be made such that respective time widths T_{f1}, T_{f2} and T_{f3} of the first, second and third fields must have the following relationship:

${\text{T}}_{\text{f1}} {\text{: T}}_{\text{f2}} {\text{: T}}_{\text{f3}} \text{= 1 : 2 : 4 (4).}$

The selection time T₀ during which the scanning electrode L₁ is selected is made equal to the selection time during which each of the other scanning electrodes L₂ to L₄ is selected. Accordingly, the time width T_{f1} of the first field has the following relationship with the selection time T₀:

${\text{T}}_{\text{f1}} \text{= 4T₀ (5).}$

From the equations (5) and (4), the respective time widths T_{f2} and T_{f3} of the second and third fields such as expressed below:

${\text{T}}_{\text{+f2}} {\text{= 2T}}_{\text{f1}} \text{= 8T₀ (6),}$
${\text{T}}_{\text{f3}} {\text{= 4T}}_{\text{f1}} \text{= 16T₀ (7).}$

Accordingly, the time width T_{F} of one frame is as follows:

${\text{T}}_{\text{F}} {\text{= T}}_{\text{f1}} {\text{+ T}}_{\text{f2}} {\text{+ T}}_{\text{f3}} \text{=7 x 4T₀ = 28T₀ (8).}$

In each field so determined, by selectively causing the arbitrarily chosen picture elements to be set in the bright or dark memory conditions, the display of 2³ = 8 gradations can be realized. By way of example, as shown by the waveform (6) in Fig. 9A, it is possible to render the picture element A₁₁, which is in the dark memory condition at each of the first to third fields, to represent a zero-th gradation and also to render the picture element A₂₁, which is in the bright memory condition at the first field, but in the dark memory condition at each of the second and third fields, to represent a first gradation (see the waveform (7) in Fig. 9A). Similarly, as shown by the waveforms (8) and (9) in Fig. 9A, the second and third gradations are displayed at the picture elements A₃₁ and A₄₁. Similarly, as shown by the waveforms (6) to (9) in Fig. 9B, the fourth to seventh gradations can be displayed by the picture elements A₁₂ to A₄₂.

In general, in order for a liquid crystal display device having a number Y of scanning electrodes to display 2ⁿ gradations (n being a positive integer), one frame is composed of n fields and the time width T_{fi} of the i-th field has the following relationship with the time width T_{f1} of the first field:

${\text{T}}_{\text{fi}} {\text{= 2}}^{\text{(i-1)}} {\text{x T}}_{\text{f1}} \text{(9).}$

The time width T_{f1} of the first field can be expressed by the following equation (10) and, therefore, the time width T_{Fn} of one frame can be expressed by the following equation (11):

${\text{T}}_{\text{f1}} \text{= YT₀ (10),}$

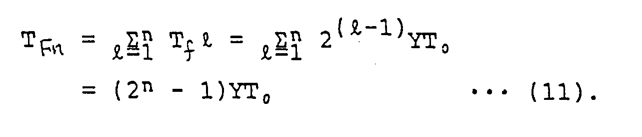

If the number Y of the scanning electrodes is selected to be 400 and the number of gradations is 2ⁿ = 2¹ - 2⁸, the number n of field and the time width T_{S} of each frame have such relationships as tabulated in Table 1 below.

**Table 1**

| Number of Gradations 2ⁿ | Number of Fields | Time Width T_{F} of Each Frame |
|---|---|---|
| 2¹ | 1 | 400T₀ |
| 2² | 2 | 1200T₀ |
| 2³ | 3 | 2800T₀ |
| 2⁴ | 4 | 6000T₀ |
| 2⁵ | 5 | 12400T₀ |
| 2⁶ | 6 | 25200T₀ |
| 2⁷ | 7 | 50800T₀ |
| 2⁸ | 8 | 102000T₀ |

In the liquid crystal display device 1 (Y = 4) shown in Fig. 7, in order to accomplish a display of 2ⁿ = 8 gradations, the time width T_{F3} of one frame must be:

${\text{T}}_{\text{F3}} \text{= (2³ - 1) x 4 x T₀ = 28T₀ (12).}$

Of this time width T_{F3} of one frame, the sum of times during which the scanning electrodes L₁ - L₄ are selected requires 4 x T₀ (seconds) for each field and is therefore $\text{3 x 4T₀ = 12T₀}$ (seconds), the remaining 16T₀ seconds being utilized for nothing associated with the display.

In general, in order for the liquid crystal display device having the Y scanning electrodes to effect a display of 2ⁿ gradations, if the sum of the selection times of the scanning electrodes L₁ - L_{Y} at the i-th field is defined as the actual application time Tᵣ₁ of the i-th field, the actual application time T_{R} of one frame can be calculated by the following equation:

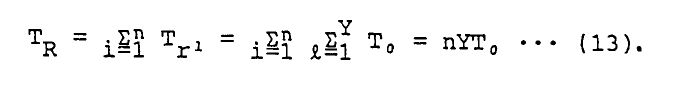

Accordingly, the proportion of the actual application time T_{Rn} relative to the time width T_{Fn} of one frame can be expressed as follows:

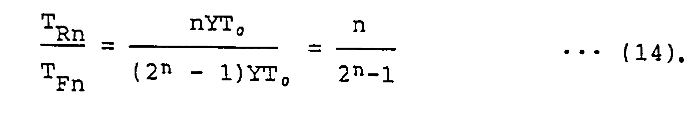

Thus, according to the conventional time-shared multi-gradation display system, the greater the number of gradations 2ⁿ, the smaller the proportion of the actual application time relative to the time width of one frame, and therefore, it cannot be said that the multi-gradation display is effected efficiently.

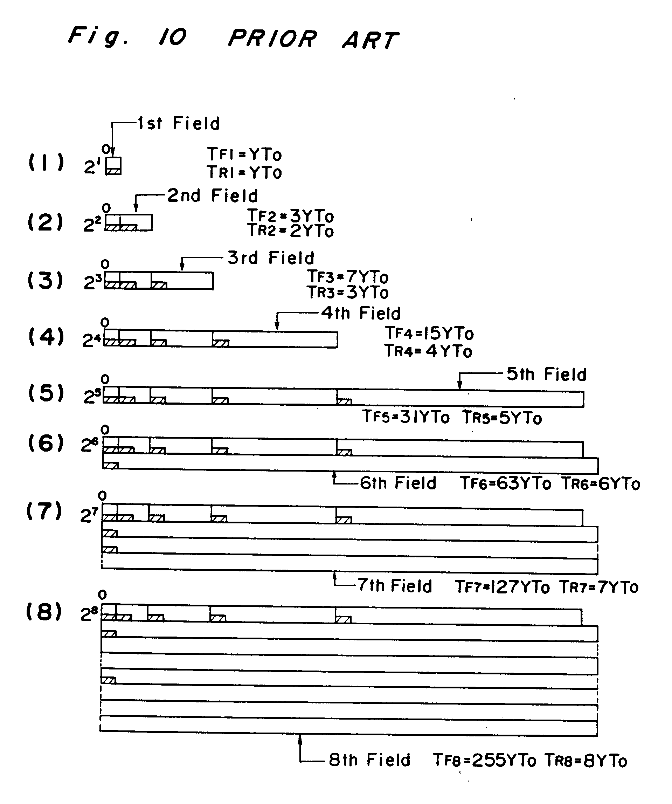

For the purpose of reference, the relationship between the time width T_{Fn} of one frame and the actual application time T_{R} of one frame is diagrammatically shown in Fig. 10. Symbols (1) to (8) used in Fig. 10 represent respective displays of 2¹ gradation to 2⁸ gradations, and each time band representative of the actual application time is shown by the associated hatching. A driving method similar to that one described based on Figs. 9 and 10 is known from US-A-4 709 995 (published 1/12/87, corresponding to GB-A-2 164 776).

The present invention has for its object to provide a driving method for a display device wherein the efficiency in terms of time is improved when the multi-gradation display is effected.

The method of the present invention is a method for driving a liquid crystal display device comprised of a matrix of columns and row electrodes intersecting with each other by forming a display picture element at each point of intersection, the number of row electrodes being Y, in which method
- the time frame for controlling each column electrode is divided into n time fields (Tf1, ..., Tfn) for achieving a display of 2ⁿ gradations by determining, by combining the signals supplied to the column and row electrodes, in which of said time fields within each time frame a display picture element is bright, said time fields having the relation 1 : 2¹ : ... ^{:} 2ⁿ⁻¹ of their time lengths, when arranged in the order of their time lengths; and
- a selection time T₀ is fixed for selecting one row electrode after the other;
   **characterized in that**
- said row electrodes are divided into K groups, wherein K is an integer not smaller than 2 and has the following relationship:

   ${\text{K ≦ (2}}^{\text{n}} \text{- 1)/n;}$
- each of said K groups of row electrodes comprises Z row electrodes, wherein Z is an integer and has the following relationship:

   $\text{Z ≧ Y/K;}$
- selecting said time frame to have a length of (2ⁿ - 1)ZT₀; and
- providing for K different arrangements of said time fields for said K different groups of row electrodes, whereby the arrangements are selected in a way that the starting points of the time fields in the different arrangements do not overlap.

In the prior art method as described based on Figs. 7 and 9, all row electrodes L1 to L4 are driven with the same arrangement of fields, which arrangement is first field, second field, third field. In contrast, in the present invention, the row electrodes are divided into two groups, the first group containing e. g. the electrodes L1 and L2, and the second one the electrodes L3 and L4. The row electrodes L1 and L2 are still driven by the conventional arrangement of fields, i. e. first field, second field, third field. However, the row electrodes L3 and L4 are driven with the arrangement second field, first field, third field. The second field of the second arrangement starts in the middle of the second field of the first arrangement. Because of this relation, none of the starting points of the fields in the second arrangement overlaps with the starting point of a field in the first arrangement.

Due to this driving method, the frame period necessary for achieving a display of 2³ gradation is only half the frame period necessary with the conventional driving method. When more row electrodes are provided and these electrodes are divided in e. g. three groups, then the necessary frame period will be only a third of the period necessary in the prior art, etc.

This and other objects and features of the present invention will become clear from the following description taken in conjunction with a preferred embodiment thereof with reference to the accompanying drawings, in which:
Fig. 1 is a schematic block circuit diagram showing a liquid crystal display device used in the practice of the present invention;
Fig. 2 is a diagram showing respective waveforms of signals applied to the display device of Fig. 1;
Figs. 3A and 3B are diagrams showing various waveforms necessitated to accomplish the driving method of the present invention;
Fig. 4 is a diagram schematically illustrating a display pattern of 2³ gradations;
Fig. 5 is a diagram schematically illustrating a display pattern of 2⁴ gradations;
Fig. 6 is a diagram used to explain the concept of the present invention;
Fig. 7 is a schematic diagram showing the typical prior art liquid crystal display device;
Fig. 8 is a diagram showing waveforms used to explain the operation of the prior art liquid crystal display device;
Figs. 9A and 9B are diagrams showing the waveforms used to explain the conventional driving method; and
Fig. 10 is a diagram used to explain the principle of the conventional driving method.

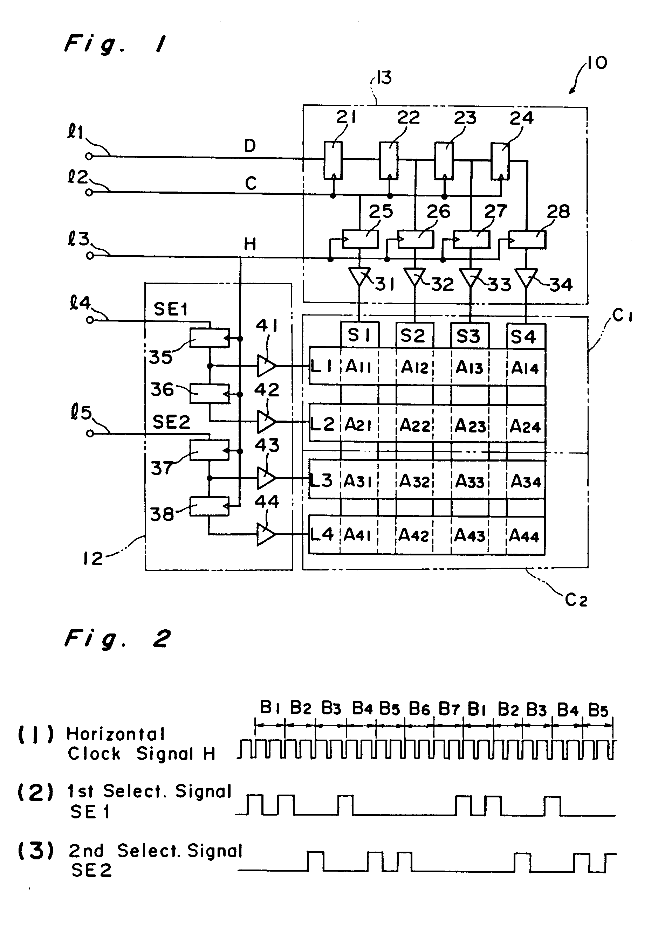

Fig. 1 illustrates, in a schematic block representation, a liquid crystal display device 10 used in the preferred embodiment of the present invention, and Fig. 2 is a diagram showing the respective waveforms of signals applied to the liquid crystal display device 10. The display device 10 comprises a plurality of, for example, four scanning electrodes L₁ to L₄ (or scanning electrodes L when reference is made to these electrodes collectively) and four signal electrodes S₁ to S₄ (or signal electrodes S when reference is made to these electrodes collectively) laid so as to alternately intersect the scanning electrodes S₁ to S₄ in a matrix of columns and rows. Further, a picture element Aₚⱼ (= 1, 2, 3 and 4) made of ferroelectric liquid crystal is disposed at each point of intersection between the scanning electrodes L and the signal electrodes S.

Voltages of predetermined levels are selectively supplied from a scanning electrode drive circuit 12 and a signal electrode drive circuit 13, respectively, to each scanning electrode L and each signal electrode S as will be described later. Respective waveforms of these voltages applied by the electrode drive circuits 12 and 13 to each electrode will now be described in detail.

First, a basic idea of the present invention will be described.

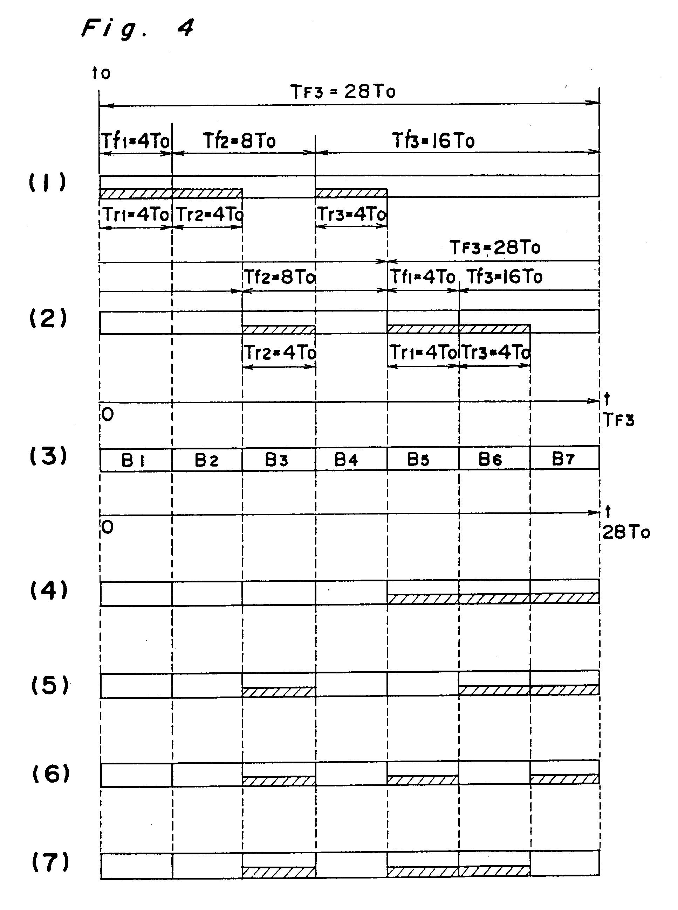

Fig. 4 is a diagram schematically illustrating a display pattern of 2³ = 8 gradations which the display device 10 can achieve. In order for the display device 10 to effect a display of 2³ = 8 gradations, one picture can be composed at a time width T_{F3} of one frame comprising first to third fields. The time widths T_{f1}, T_{f2} and T_{f3} of the first to third fields have the following relationship;

${\text{T}}_{\text{f1}} {\text{: T}}_{\text{f2}} {\text{: T}}_{\text{f3}} \text{= 1 : 2 : 4 (15)}$

and the time width T_{f1} of the first field is set so as to be 4 times the selection time T₀ during which each scanning electrode L₁ to L₄ is individually selected, that is, T_{f1} = 4T₀.

The time width T_{F3} of one frame, so defined, is divided into 7 equal fractions which are defined as first to seventh blocks B₁ to B₇ repeated at intervals of a time width of T_{f1} = 4T₀ between the timing t0 to the first field. (see (3) in Fig. 4.)

(1) in Fig. 4 illustrates the display pattern which provides the basis. In this display pattern, at each field, the time during which the scanning electrodes L₁ to L₄ are selected, that is, the actual application time during which a driving voltage is actually applied to each scanning electrode, is set for each of the first to fourth blocks B₁ to B₄ as shown by the respective hatching in Fig. 4.

If a display pattern is determined in which the actual application time will not overlap with the display pattern shown in Fig. 4, and in which the display can also be effected in 8 gradations, a display pattern such as shown by (2) in Fig. 4 can be obtained. Hereinafter, a process of determining this display pattern will be discussed.

In the display pattern shown by (1) in Fig. 4, the number of combinations available of any arbitrarily chosen three blocks of the third, fifth, sixth and seventh blocks B₃, B₅, B₆ and B₇, each of which does not fall within the actual application time, is ₄C₃ = 4. These four display patterns are shown respectively by (4) to (7) in Fig. 4. Of these four display patterns, the display pattern in which the time widths T_{f1}, T_{f2} and T_{f3} of the first to third fields can satisfy the equation (15), is the one shown by (7) in Fig. 4. That is, this display pattern is identical with the display pattern shown by (2) in Fig. 4 and referred to hereinabove.

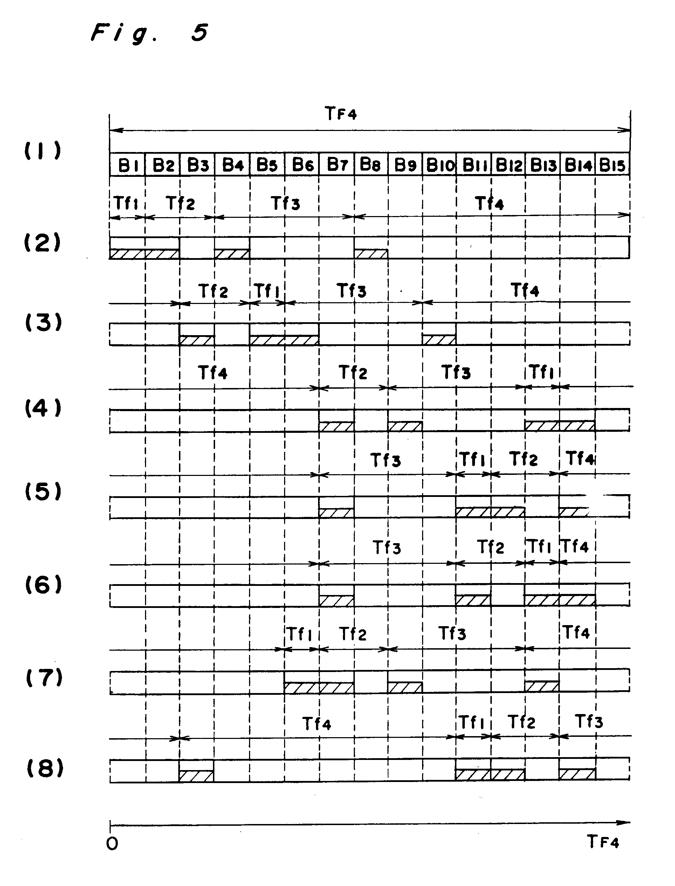

Fig. 5 is a diagram schematically illustrating examples of display patterns necessitated for the liquid crystal display device 1 so as to effect a display in 2⁴ = 16 gradations. In this case, the time width T_{f4} of one frame is divided into 15 (= 2⁴ - 1) equal fractions which are, in a manner similar to the previously discussed 8-gradation display pattern, defined as first to fifteenth blocks B₁ to B₁₅ repeated at intervals starting from the timing t0 (See (1) in Fig. 5). The actual application time is set in each of the first, second, fourth and eighth blocks B₁, B₂, B₄ and B₈ so that the display pattern which provides the basis, and is shown by (2) in Fig. 5, can be synthesized.

In the basic display pattern referred to above, the number of combinations available of an arbitrarily chosen four blocks of the third, fifth, sixth, seventh, ninth, tenth, eleventh, twelfth, thirteenth, fourteenth and fifteenth blocks B₃, B₅, B₆, B₇, B₉, B₁₀, B₁₁, B₁₂, B₁₃, B₁₄ and B₁₅ is ₁₁C₄ = 330. Of these 330 display patterns, some display patterns such as, for example, shown by (3) to (8) in Fig. 5 can be found wherein, as is the case with the display pattern providing the basis, the time widths T_{f1} to T_{f4} of the respective first to fourth fields have the following relationship:

${\text{T}}_{\text{f1}} {\text{: T}}_{\text{f2}} {\text{: T}}_{\text{f3}} {\text{: T}}_{\text{f4}} \text{= 1 : 2 : 4 : 8 (16).}$

Thus two display patterns in which the respective actual application times do not overlap with each other can be found out of some such display pattern.

This search method will now be described with reference to Fig. 6. In the following description the selected display pattern will be designated by reference characters used to denote the blocks corresponding to the respective actual application times. By way of example, the display pattern providing the basis as shown by (2) in Fig. 5, will be designated by (B₁, B₂, B₄, B₈).

At the outset, the basic display pattern (B₁, B₂, B₄, B₈) is selected, followed by the selection of the display pattern (B₃, B₅, B₆, B₁₀) shown by (3) in Fig. 5, that is, the display pattern which is selected out of the 330 (= ₁₁C₄) display patterns and in which the third block B₃ is included and the time widths T_{f1} to T_{f4} of the respective first to fourth fields satisfy the equation (16). Finally, out of the remaining blocks, that is, the seventh block B₇, the ninth block B₉, and the eleventh to fifteenth blocks B₁₁ to B₁₅, the display pattern which includes the seventh block B₇ and, at the same time, satisfies the equation (16), that is, the display pattern (B₇, B₉, B₁₃, B₁₄) shown by (4) in Fig. 5 is selected. The three display patterns (B₁, B₂, B₄, B₈), (B₃, B₅, B₆, B₉) and (B₇, B₉, B₁₃, B₁₄) are recorded as a combination of these display patterns.

Then, using the display pattern (B₃, B₅, B₆, B₁₀) shown by (3) in Fig. 5 as a basic display pattern, a search is made to find the display pattern other than the display pattern (B₇, B₉, B₁₃, B₁₄) shown by (4) in Fig. 5, but satisfying the equation (16), that is, the display pattern (B₇, B₁₁, B₁₂ B₁₄) shown by (5) in Fig. 5, and these three display patterns (B₁, B₂, B₄, B₈), (B₃, B₅, B₆, B₁₀) and (B₇, B₁₁, B₁₂, B₁₄) are recorded as another one combination of display patterns.

In this way, using the display pattern (B₃, B₅, B₆, B₁₀) shown by (3) in Fig. 5 as a basic display pattern, all of the display patterns which satisfy the equation (16) are recorded. Then, if all of the display patterns which satisfy the equation (16) are successively recorded in such a way as to select, for example, the display pattern (B₃, B₇, B₉, B₁₀) with the display pattern (B₁, B₂, B₄, B₈), shown by (2) in Fig. 5, are used as basic display pattern again, some combinations of the display patterns can be found wherein no actual application times overlaps with each other occur.

Generally, when the display in 2ⁿ gradations is to be accomplished, the number M of the combinations of the display patterns in which the time width T_{fi} of the i-th field satisfies the following equation (17) and in which the actual application times do not overlap with each other is a positive integer which satisfies the following equation (18).

${\text{T}}_{\text{fi}} {\text{= 2}}^{\text{(i-1)}} {\text{x T}}_{\text{fi}} \text{(17)}$

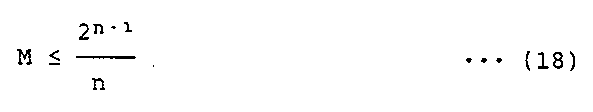

A method for driving the liquid crystal display device according to the present invention based on the foregoing concept will now be described.

Herein, a display method, employed in the liquid crystal display device utilizing the Y scanning electrodes, for effecting a display in the 2ⁿ gradations according to a time sharing method, will be described. In the first place, the time width T_{Fn} of one frame is divided into (2ⁿ-1) equal blocks which are respectively defined as the first block B₁, the second block B₂, ... and the (2ⁿ-1)th block B₂ⁿ⁻¹) according to the time sequence.

At the outset, the display pattern (B₂₀, B₂₁, ..., B₂ₙ₋₁) which provides the basis is selected out of the (2ⁿ-1) blocks , and then, out of the remaining (2ⁿ-1-n) blocks, the display pattern (Bₐ, B_{b}, B_{c}, ... B_{g}, Bₕ) in which identical blocks do not overlap with each other is selected. It is, however, to be noted that, in this display pattern, the affix "a" represents an arbitrary positive integer other than (2⁰, 2¹, ..., 2ⁿ⁻¹) and the affixes "b", "c", ..., "g" and "h" are selected to be respective positive integers which satisfy the following respective equations:

${\text{b = ROT (α₁ + a, 2}}^{\text{n}} \text{-1) (19.1)}$
${\text{c = ROT (α₂ + b, 2}}^{\text{n}} \text{-1) (19.2)}$
.
.
.
${\text{h = ROT (α}}_{\text{n-1}} {\text{+ g, 2}}^{\text{n}} \text{-1) (19.n-1).}$

In the following equation

$\text{z = ROT (x, y) (20)}$

z is defined as a reminder which is given when x is divided by y. In the equation (19), (α₁, α₂, ..., αₙ₋₁) correspond to (2⁰, 2¹, 2², ..., 2ⁿ⁻¹) respectively. In the equation (20) all of x, y and z are positive integers. When x = y,

$\text{ROT (x, y) = x (21).}$

The display pattern, which satisfies those conditions, can be found in a maximum number of (M-1) wherein M represents a positive integer that satisfies the equation (18).

Then, the Y scanning electrodes are divided into K groups C₁, C₂, ..., Cₖ of scanning electrodes wherein K is a positive integer and wherein:

$\text{K ≦ M (22).}$

Further, the number Z of the scanning electrodes forming each of the groups thereof is selected so as to satisfy the following equation:

$\text{Z ≧} \frac{\text{Y}}{\text{K}} \text{(23).}$

In the liquid crystal display device now under discussion, if no positive integer which satisfies the following relationship;

$\text{Z =} \frac{\text{Y}}{\text{K}} \text{(24)}$

can be chosen, it is suggested to take into consideration a liquid crystal display device having a number Y1 of scanning electrodes which satisfies the following equation:

$\text{Y1 = ZK (25).}$

The time width T_{FN} is then set to have the following relationship:

${\text{T}}_{\text{Fn}} {\text{= (2}}^{\text{n}} \text{-1)ZT₀ (26)}$

wherein T₀ represents the selection time for each of the scanning electrodes L₁ to L_{Y1}. Thus, the time width for each block is set to ZT₀ (second).

The operation based on the time sharing multi-plex multi-gradation display method according to the present invention will now be described.

At the outset, during a time zone of the block represented by the display pattern (B₂₀, B₂₁, ..., B₂ₙ₋₁) providing the basis, each of the scanning electrodes included in the electrode group C₁ is brought into a selected state. At the same time, during a time zone of each block represented by the display pattern (Bₐ₁, B_{b1}, ..., Bₕ₁) selected from the blocks other than the display pattern (B₂₀, B₂₁, ..., B₂ₙ₋₁), the scanning electrodes included in the electrode group C₂ are sequentially brought into a selected state. In this way, a display of 2ⁿ gradations can be accomplished during the time width T_{FN} of one frame as shown by the equation (26).

To describe in more detail, during each selection time T₀ (second) for the scanning electrodes starting from the timing t = (2⁰ - 1) = 0 (second) at which one frame starts, the scanning electrodes included in the electrode group C₁ are sequentially brought into the selected state with the picture elements on such scanning electrodes consequently brought into the bright or dark memory state.

Subsequently, during each selection time T₀ (second) starting from the timing t = (2² - 1)ZT₀ (second), the scanning electrodes included in the electrode group C₁ are brought into the selected state with the picture elements on such scanning electrodes brought into the bright or dark memory state. In this way, during each time zone for the blocks set for the display pattern (B₂₀, B₂₁, ..., B₂ₙ₋₁), the picture elements on the electrode group C₁ are caused to affect a display of 2ⁿ gradations.

Also, at the same time, the scanning electrodes included in the electrode group C₂ are brought into the selected state from the timing t = (a₁-1)ZT₀ (second) (wherein a₁ is a positive integer other than 2⁰, 2¹, ..., 2ⁿ⁻¹) with the picture elements on such scanning electrodes brought into the bright or dark memory state. Thereafter, the scanning electrodes included in the electrode group C₂ are brought into the selected state from the timing t = (b₁ - 1)ZT₀ (second) (wherein 6, is a positive integer capable of satisfying the equation (19.1)). In this way, the picture elements on the scanning electrodes in the electrode group C₂ are sequentially caused to affect a display of 2ⁿ gradations. Further, at the same time, the scanning electrodes included in the electrode group C₃ are sequentially brought into the selected state from the timing t = (a₂ - 1)ZT₀ (second) with the picture elements on such scanning electrodes in the electrode group C₃ consequently caused to affect a display of 2ⁿ gradations.

As hereinabove described, the display in 2ⁿ gradations can be accomplished by the picture elements in the scanning electrode groups C₁ to C_{K} during the one-frame time width T_{Fn} expressed by the equation (26).

For the purpose of reference, the relationships of the one-frame time width T_{F} relative to the display in 2¹ to 2⁸ gradations with the number Y of scanning electrodes taken as 400 are tabulated in Table 2 below.

**Table 2**

| | | | | | | | | |
|---|---|---|---|---|---|---|---|---|
| Number of Gradations 2ⁿ | 2¹ | 2² | 2³ | 2⁴ | 2⁵ | 2⁶ | 2⁷ | 2⁸ |
| n | 1 | 2 | 3 | 4 | 5 | 6 | 7 | 8 |
| 2ⁿ-1 | 1 | 3 | 7 | 15 | 31 | 63 | 127 | 255 |
| Max. Division Number M | 1 | 1 | 2 | 3 | 6 | 10 | 18 | 31 |
| Number of Unit Electrodes Z | 400 | 400 | 200 | 134 | 67 | 40 | 23 | 13 |
| Frame Time Width T_{F} | 400T₀ | 1200T₀ | 1400T₀ | 2010T₀ | 2077T₀ | 2520T₀ | 2921T₀ | 3315T₀ |

As can be understood from Table 2, the driving method according to the present invention exhibits the maximum effect when n ≧ 3.

An example will now be described in which the above described driving method is applied to the liquid crystal display device 10 of the type shown in Fig. 1 for affecting the display of 2³ gradations.

In this example, the one-frame time width T_{F3} is divided into (2³ - 1) = 7 equal fractions which are respectively defined as the first to seventh blocks B₁ to B₇ in a sequential order. Since n = 3, the equation (18) can be modified as follows: 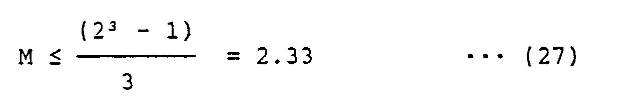
and the maximum division number M gives 2. Then, the display pattern (B₁, B₂, B₄) which provides the basis is secured out from the seven blocks, and the display pattern (B₃, B₅, B₆) which satisfies the relationship shown by the equation (16) is secured out from the remaining four blocks. Since the maximum division number M is 2, no combination of display patterns greater than two is available.

Then, the scanning electrodes L₁ to L₄ are divided into two scanning electrode groups. By way of example, the scanning electrodes L₁ and L₂ are allocated to a first scanning electrode group C₁ and the scanning electrodes L₂ and L₄ are allocated to a second scanning electrode group C₂. Accordingly, the number Z of the unit electrodes is two. For the selection time T₀ (second) of the scanning electrodes L₁ to L₄, the equation (26) gives the one-frame time width T_{F3} as follows:

${\text{T}}_{\text{F3}} \text{= (2³ - 1) x 2 x T₀ = 14T₀ (28).}$

Accordingly, the time width of each of the blocks is set to 2T₀ (second).

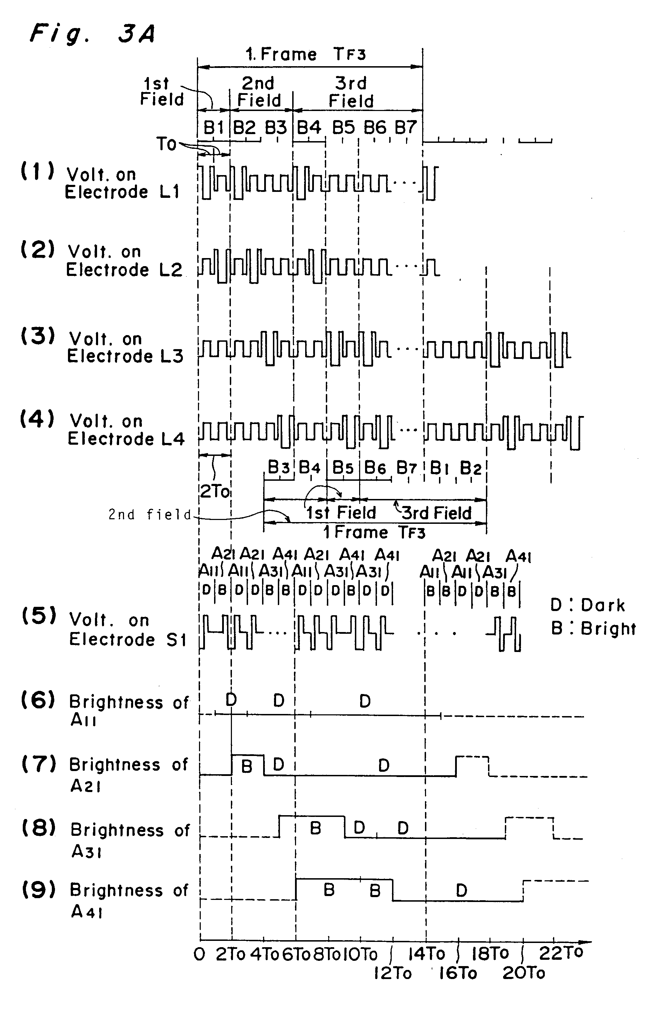

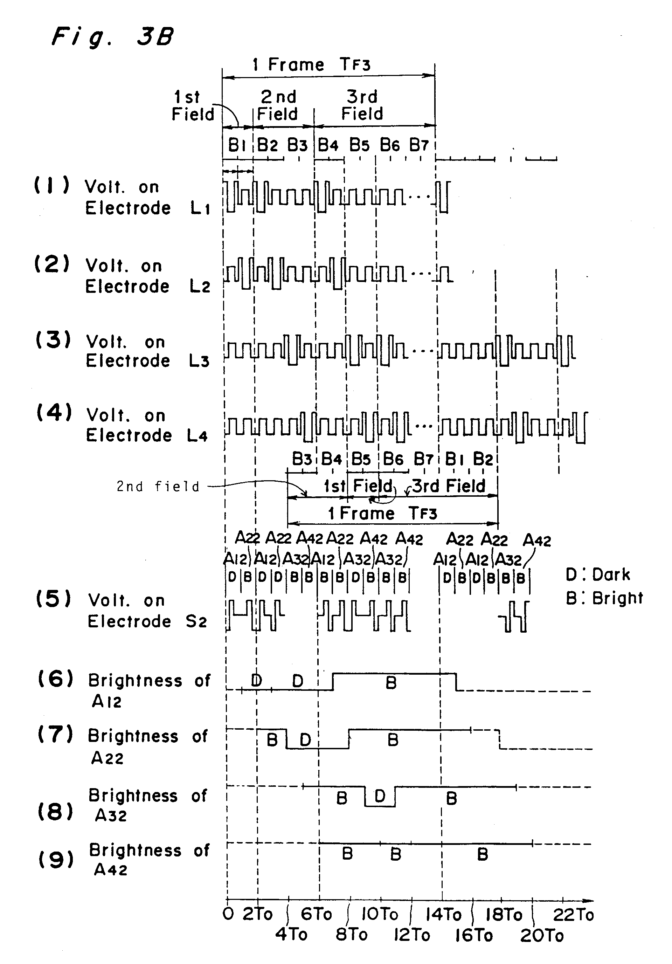

Figs. 3A and 3B illustrate waveforms used to describe the operation of the liquid crystal display device 10. Waveforms of respective voltages applied to the scanning electrodes L₁ to L₄ are shown by (1) to (4) in Fig. 3A, whereas brightnesses of the respective picture elements A₁₁ to A₄₄ are shown by (6) to (9) in Fig. 3A. Shown by (1) to (4) in Fig. 3B are respective waveforms of the voltages applied to the scanning electrodes L₁ to L₄ (which are identical with the waveforms (1) to (4) in Fig. 3A), whereas a waveform of a voltage applied to the signal electrode S2 is shown by (5) in Fig. 3B.

Referring now to Figs. 3A and 3B, the details of the driving method in this preferred embodiment of the present invention will be described. It is, however, to be noted that, in each of Figs. 3A and 3B, only waveforms of signals associated respectively with the signal electrodes S1 and S2 are shown. Those associated with the signal electrodes S3 and S4 are neither illustrated nor described for the sake of brevity.

Starting from the timing t = 0, the scanning electrodes L₁ and L₂ included in the first electrode group C₁ are brought into a selected state during each selection time T₀ (second) of the scanning electrodes. Thereby, the picture elements A₁₁, A₂₁, A₁₂, A₂₂, ... are set in dark, bright, dark, bright ... memory states, respectively. Subsequently, and starting from the timing t = 2T₀, the scanning electrodes L₁ and L₂ are brought into the selected state with all of the picture elements A₁₁, A₂₁, A₁₂ and A₂₂ set in the dark memory state. Then, starting from the timing t = 6T₀, the same scanning electrodes L₁ and L₂ are brought into the selected state with the picture elements A₁₁ and A₂₁ and the picture elements A₁₂ and A₂₂ set in the dark and bright memory states, respectively. In this way, the picture elements on the scanning electrodes L₁ and L₂ included in the first electrode group C₁ are caused to effect a display in 2³ gradations.

Simultaneously with the foregoing operation, starting from the timing t = 4T₀ (second), the scanning electrodes L₃ and L₄ included in the second electrode group C₂ are brought into a selected state during each selection time T₀ to cause all of the picture elements A₃₁, A₄₁, A₃₂ and A₄₂ to be set in a bright memory state. Subsequently and starting from the timing t = 8T₀ (second), the same scanning electrodes L₃ and L₄ are brought into the selected state to cause the picture elements A₃₁ and A₃₂ and the picture elements A₄₁ and A₄₂ to be set in the dark and bright memory states, respectively. Again, starting from the timing t = 10T₀ (second), the scanning electrodes L₃ and L₄ are brought into the selected state to cause the picture elements A₃₁ and A₄₁ and the picture elements A₃₂ and A₄₂ to be set in the dark and bright memory states, respectively. In this way a display in 2³ gradation can be accomplished with respect to the second electrode group C₂.

Thus, during the one-frame time width T_{F3} = 14T₀ (See the equation (28)), all of the picture elements associated with the first and second scanning electrode groups C₁ and C₂ can be caused to effect a display in 2³ gradations. It is to be noted that when the driving method described in connection with the prior art was practiced under identical conditions as described in connection with the illustrated embodiment, the one-frame time width has been required to be 28T₀ (second). Therefore, it is clear that, with the illustrated embodiment, a display speed which is twice that achieved by the conventional method can be realized, and, accordingly, the liquid crystal display device 1 can be more efficiently driven.

The respective waveforms of the voltages shown in each of Figs. 3A and 3B can be obtained by applying signals of the waveforms, shown in Fig. 2, to the liquid crystal display device 10.

An input data signal D supplied through a line ℓ1 is inputted to four shift registers 21 to 24 while sequentially being shifted in response to a basic clock signal C supplied through a line ℓ2. Respective outputs from these shift registers 21 to 24 are supplied through associated registers 25 to 28 to drive circuits 31 to 34 for driving the signal electrodes S1 to S4, respectively. These four registers 25 to 28 are supplied with a common horizontal clock signal H (whose waveform is shown by (1) in Fig. 2).

With respect to the scanning electrodes, a first selection signal SE1 (whose waveform is shown by (2) in Fig. 2) necessary to bring the first electrode group C₁ into the selected state and a second selection signal SE2 (whose waveform is shown by (3) in Fig. 2) necessary to bring the second electrode group C₂ into the selected state, are supplied respectively through lines ℓ4 and ℓ5.

The first selection signal SE1 is supplied to shift registers 35 and 36 while being shifted according to the horizontal clock signal H. Outputs from the shift registers 35 and 36 are supplied to drive circuits 41 and 42 for driving the scanning electrodes L₁ and L₂. Similarly, the second selection signal SE2 is supplied to shift registers 37 and 38 which are shifted according to the horizontal clock signal H, respectively. Outputs from these shift registers 37 and 38 are in turn supplied to drive circuits 43 and 44 for driving the scanning electrodes L₃ and L₄, respectively.

In this manner, the voltages of the waveforms shown in, for example, Figs. 3A and 4A can be applied to the associated electrodes, wherefore the driving method according to the present invention can be realized.

From the foregoing description it is clear that, according to the driving method of the present invention, the time required to accomplish a display in multiple gradations can be considerably reduced. Also, according to the driving method of the present invention, the greater the number of gradations, the more considerably the time required for the display is reduced.

## Claims

1. A method for driving a liquid crystal display device comprised of a matrix of columns and row electrodes intersecting with each other by forming a display picture element at each point of intersection, the number of row electrodes being Y, in which method
- the time frame for controlling each column electrode is divided into n time fields (TF1, ..., TFN) for achieving a display of 2ⁿ gradations by determining, by combining the signals supplied to the column and row electrodes, in which of said time fields within each time frame a display picture element is bright, said time fields having the relation 1 : 2¹ : ... ^{:} 2ⁿ⁻¹ of their time lengths, when arranged in the order of their time lengths; and
- a selection time T₀ is fixed for selecting one row electrode after the other;
**characterized in that**
- said row electrodes are divided into K groups, wherein K is an integer not smaller than 2 and has the following relationship:
${\text{K ≦ (2}}^{\text{n}} \text{- 1)/n;}$
- each of said K groups of row electrodes comprises Z row electrodes, wherein Z is an integer and has the following relationship:
$\text{Z ≧ Y/K;}$
- selecting said time frame to have a length of (2ⁿ - 1)ZT₀; and
- providing for K different arrangements of said time fields for said K different groups of row electrodes, whereby the arrangements are selected in a way that the starting points of the time fields in the different arrangements do not overlap.

## Patentansprüche

1. Verfahren zum Ansteuern einer Flüssigkristallanzeigevorrichtung mit einer Matrix aus Zeilen- und Spaltenelektroden, die einander zur Ausbildung eines Anzeigebildelements an jedem Schnittpunkt überkreuzen, wobei die Anzahl von Spaltenelektroden Y ist, bei welchem Verfahren
- der Zeitrahmen zum Steuern jeder Zeilenelektrode in n Zeitfelder (TF1, ..., TFN) unterteilt wird, um eine Anzeige mit 2ⁿ Gradationsstufen dadurch zu erzielen, daß durch Kombinieren der den Zeilen- und Spaltenelektroden zugeführten Signale bestimmt wird, in welchem der zeitlichen Felder innerhalb jedes zeitlichen Rahmens ein Anzeigebildelement hell ist, wobei die Felder hinsichtlich ihrer zeitlichen Längen der Beziehung 1 : 2¹ : ... : 2ⁿ⁻¹ genügen, wenn sie in der Reihenfolge ihrer zeitlichen Längen angeordnet werden; und
- eine Auswahlzeitspanne T₀ festgelegt wird, um eine Spaltenelektrode nach der anderen auszuwählen;
**dadurch gekennzeichnet,** daß
- die Spaltenelektroden in K Gruppen unterteilt werden, wobei K eine ganze Zahl nicht kleiner als 2 ist, die der folgenden Beziehung genügt:
${\text{K ≦ (2}}^{\text{n}} \text{- 1)/n;}$
- jede der K Gruppen von Spaltenelektroden Z Spaltenelektroden aufweist, wobei Z eine ganze Zahl ist und der folgenden Beziehung genügt:
$\text{Z ≧ Y/K;}$
- der Zeitrahmen so ausgewählt wird, daß er eine Länge von (2ⁿ - 1)ZT₀ aufweist; und
- für K verschiedene Anordnungen der zeitlichen Felder für die K verschiedenen Gruppen von Spaltenelektroden gesorgt wird, wobei die Anordnungen auf solche Weise ausgewählt sind, daß die Anfangspunkte der Zeitfelder in den verschiedenen Anordnungen einander nicht überlappen.

## Revendications

1. Procédé de commande d'un dispositif d'affichage à cristaux liquides comprenant une matrice d'électrodes en colonnes et en rangées qui se coupent entre elles pour former un élément d'image d'affichage à chaque point d'intersection, le nombre des électrodes de rangées étant égal à Y, procédé dans lequel:
- la tranche de temps pour la commande de chaque électrode de colonne est divisée en n intervalles de temps (TF1, ..., TFN) pour obtenir un affichage de 2ⁿ gradations en déterminant, par la combinaison des signaux fournis aux électrodes de colonnes et de rangées, ceux desdits intervalles de temps compris dans chaque tranche de temps dans lesquels un élément d'image d'affichage est clair, lesdits intervalles de temps présentant, entre leur durée, la relation 1 : 2¹ : ... : 2ⁿ⁻¹, lorsqu'ils sont disposés dans l'ordre de leur durée; et
- un instant de sélection T₀ est fixé pour sélectionner une électrode de rangée après l'autre;
caractérisé en ce que
- lesdites électrodes de rangées sont divisées en K groupes, K étant un nombre entier égal au moins à 2 et présentant la relation suivante:
${\text{K ≦ (2}}^{\text{n}} \text{- 1)/n;}$
- chacun desdits K groupes d'électrodes de rangées comprend Z électrodes de rangées, Z étant un nombre entier et présentant la relation suivante:
$\text{Z ≧ Y/K;}$
- on sélectionne ledit intervalle de temps de façon à ce que sa durée soit égale à (2ⁿ - 1)ZT₀; et
- il est prévu K dispositions différentes desdits intervalles de temps pour lesdits K groupes différents d'électrodes de rangées, si bien que les dispositions sont sélectionnées de façon à ce que les points de départ des intervalles de temps dans les différentes dispositions ne se chevauchent pas.
